# EUROPEAN PATENT APPLICATION

(11) **EP 1 048 563 A2**
(43) Date of publication of application: **02.11.2000**
(21) Application number: 00303568.0
(22) Date of filing: 27.04.2000
(51) Int. Cl.: B64C 9/02, F16F 1/38

(54) **Self-centering bearing for aircraft control surfaces**

(30) Priority: 30.04.1999 US 303782
(71) Applicant: LORD CORPORATION, Cary, NC 27512-8012 (US)
(72) Inventor: Donovan, Neil J., Erie, PA 16505 (US)
(74) Representative: Dunlop, Brian Kenneth Charles

(57) **Abstract**

A control surface assembly includes: a control surface member; a shaft attached to the control surface member; a control system connected with the shaft; and a bearing. The shaft has a longitudinal axis defining an axis of rotation for the control surface member. The control system is configured to induce rotation in the shaft about the axis of rotation such that the control surface member rotates between a first preselected position and a second rotated position. The bearing includes a first member (12), a second member (16) and a resilient intermediate member (14) positioned between and attached to the first (12) and second members (16). The first member (12) is attached to the shaft (26), and the second member (16) is adapted for non-releasable fixed attachment to the vehicle during operation of the vehicle. In response to rotation induced by the control system during operation, the first member (12), the shaft (26) and the control surface member (16) rotate about the axis of rotation from the preselected to the rotated position, the second member (16) remains fixed relative to the vehicle, and the intermediate member undergoes angular deflection and biases the first member (12), shaft (26) and control surface member (16) to rotate toward the preselected position, such that disabling of the control system causes the control surface member to return to the preselected position.

## Description

### Field of the Invention

The present invention relates generally to bearings, and relates more particularly to bearings that support control surface assemblies.

### Background of the Invention

The wings and tails of aircraft typically include pivotable control surfaces (usually called elevators, flaps or ailerons, depending on their location and function) that assist maneuvering the aircraft during flight. The typical control surface is attached to its adjoining structure such that it can be pivoted to a neutral position, where its surfaces are essentially contiguous with those of the adjoining structure, or to a rotated position, in which its surfaces are not contiguous with the adjoining structure. In a rotated position, the control surface modifies the velocity and/or direction of the airstream flowing over the wing or tail, thereby changing the pressure distribution (and thus the lift forces) that the surrounding atmosphere generates on the wing or tail.

Generally, a control surface is mounted on one end of a shaft. The opposite end of the shaft is connected with a rotary motion device that imparts rotation to the shaft and, in turn, to the control surface. Typically, the rotary motion device includes a control system (often electronic) that positions the control surface based on pilot input.

Ordinarily, an intermediate portion of the shaft that carries the control surfaces is supported by a bearing mounted onto the wing or tail. The bearing is usually included to assist in stabilizing the control surface. In this manner, the positioning of the control surface can be controlled more precisely.

Although they are very popular, control surface assemblies of the variety described above have some potential shortcomings. For example, if the control system that controls the position of a control surface becomes disabled, the pilot may have no manner in which to move the control surface. As such, the control surface may remain in the position it occupied at the time of disablement, which may well be a position that renders maneuvering of the aircraft very difficult (and potentially dangerous). Also, the resonance characteristics of a control surface assembly may cause it to flutter at desirable airspeeds.

U.S. Patent No. 2.509.141 to Freel discusses a control surface lock that secures a control surface in a neutral position to protect against wind gusts when an aircraft is grounded, but allows for slight repositioning of the control surface if the pilot attempts to take-off without first removing the lock. The lock includes a cylindrical rubber sleeve that is sandwiched between two metal sleeves, the inner one of which is attached to the control surface assembly shaft, and the outer one of which includes a crank that enables the outer sleeve to be releasably locked to the wing. During normal and preferred operation of the aircraft, the lock is released, and the outer sleeve rotates with the rubber and inner sleeves. However, the rubber sleeve has sufficient pliability that it allows the control surface to pivot slightly even if the pilot forgets to release the lock prior to take-off and attempts to pivot the control surface. Unfortunately, the Freel device fails to offer a solution that addresses the aforementioned problem of the control surface being dangerously positioned in the event of control system failure.

### Summary of the Invention

In view of the foregoing, it is an object of the present invention to provide a device that may reposition a control surface to a preferred position automatically in the event that the control system that generally controls the position of the control surface fails or becomes disabled.

It is also an object of the present invention to provide such a device that may assist in reducing or eliminating resonance in a control surface assembly.

These and other objects are achieved by the present invention, which in a first aspect is directed to a self-centering control surface assembly for assisting in the maneuvering of a vehicle in a fluid medium. The control surface assembly includes: a control surface member: a shaft attached to the control surface member; a control system connected with the shaft: and a bearing. The shaft has a longitudinal axis defining an axis of rotation for the control surface member. The control system is configured to induce rotation in the shaft about the axis of rotation such that the control surface member rotates about the axis of rotation between a first preselected position and a second rotated position. The bearing comprises a first member, a second member and a resilient intermediate member positioned between and attached to the first and second members. The first member is attached to the shaft, and the second member is adapted for non-releasable fixed attachment to the vehicle during operation of the vehicle. In response to rotation induced by the control system during operation of the vehicle, the first member, the shaft and the control surface member rotate about the axis of rotation from the preselected position to the rotated position, the second member remains fixed relative to the vehicle, and the intermediate member undergoes angular deflection and biases the first member, the shaft and the control surface member to rotate toward the preselected position, such that disabling of the control system causes the first member, the shaft and the control surface member to return to the preselected position. In this configuration, the control surface assembly is self-centering, with the result that the control surface member (such as a rudder. elevator, aileron, or the like) becomes positioned in a desirable preselected position (such as a neutral position ) in the event of control system disablement.

In a second aspect, the present invention is directed to a self-centering assembly for rotating and pivoting a moveable member. The self-centering assembly includes: a moveable member: a shaft attached to the moveable member. a control system connected with the shaft, and a bearing. The shaft has a longitudinal axis defining a first axis of rotation. The control system is configured to induce rotation in the shaft about the first axis of rotation such that the moveable member rotates about the axis of rotation between a first preselected position and a second rotated position. The control system is also configured to induce pivotal motion in the moveable member along a second axis of rotation substantially perpendicular to the first axis of rotation between the preselected position and a pivoted position.

As with the assembly described above, the bearing comprises a first member, a second member and a resilient intermediate member positioned between and attached to the first and second members. The first member is attached to the shaft, and the second member is adapted for fixed attachment to an external structure. In response to rotation induced by the control system during operation of the vehicle, the first member, the shaft and the moveable member rotate about the axis of rotation from the preselected position to the rotated position, the second member remains fixed relative to the external structure, and the intermediate member undergoes angular deflection and biases the first member, the shaft and the moveable member to rotate toward the preselected position, such that disabling of the control system causes the first member, the shaft and the moveable member to return to the preselected position.

Also, in response to pivotal movement induced by the control system, the first member, the shaft and the moveable member pivot about the second axis of rotation from the preselected position to the pivoted position, the second member remains fixed relative to the external structure, and the intermediate member deflects and biases the first member, the shaft, and the moveable member toward the preselected position, such that disabling of the control system causes the first member, the shaft and the moveable member to return to the preselected position. In this configuration, which preferably comprises substantially hemispheric intermediate and second members, the bearing serves to self-center the shaft and moveable member in the event the control system is disabled.

### Brief Description of the Drawings

**Figure 1A** is a section view of a self-centering bearing according to an embodiment of the present invention.

**Figure 1B** is an end view of the bearing of **Figure 1A**

**Figure 2** is a perspective view of a tail assembly that includes a self-centering bearing of **Figure 1A**.

**Figure 3** is a side view of the bearing of the tail assembly of **Figure 2** showing the elevator in a neutral position.

**Figure 4** is a side view of the bearing of the tail assembly of **Figure 2** showing the elevator in a rotated position.

**Figure 5** is a section view of another embodiment of a self-centering bearing of the present invention.

**Figure 6** is a section view of the bearing of **Figure 5** showing rotation of the shaft about its longitudinal axis.

**Figure 7** is a section view of the bearing of **Figure 5** showing pivotal movement of the shaft about an axis perpendicular to the long axis of the shaft.

### Detailed Description of the Preferred Embodiments

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art.

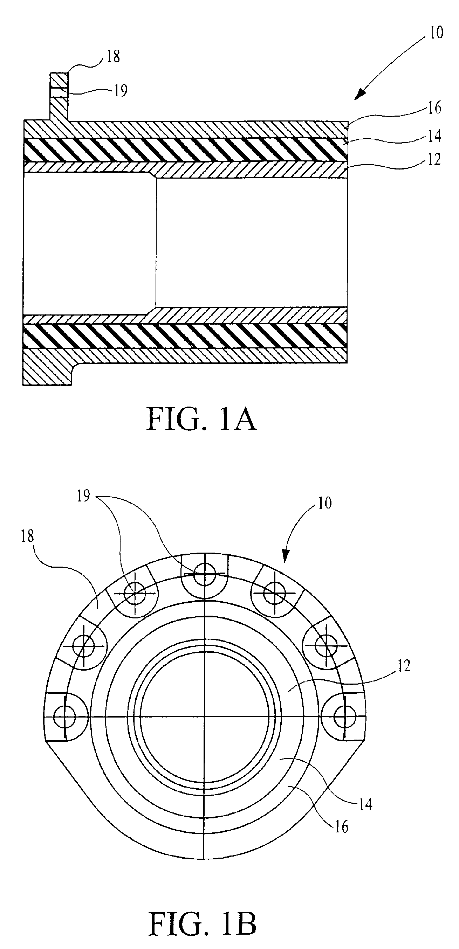

Referring now to the drawings. **Figures 1A** and **1B** illustrate a bearing of the present invention designated broadly at **10**. The bearing **10** is generally cylindrical and includes an inner member **12**, a resilient intermediate member **14** that is fixed to and overlies the inner member **12**, and an outer member **16** that is fixed to and overlies the intermediate member **14**. The inner member **12** is sized and configured to receive a shaft (not shown in **Figure 1A** and **1B**) that can, in turn, be attached to a control surface, such as an elevator for an aircraft tail assembly. The outer member **16** has a radially-extending flange **18** with apertures **19** (only one of which is illustrated in **Figure 1**); the flange **18** is adapted for mounting to an adjoining structure, such as the wing or tail of an aircraft, to non-releasably fix the outer member **16** thereto.

As used herein, structures that are "non-releasably" fixed to one another are attached such that there is no relative movement between those structures after assembly and during operation of the device to which the structures are attached; thus, attachment of the flange **18** to an aircraft wing or tail via bolts inserted through apertures **19** indicates a non-releasable fixed attachment, as the flange **18** would not move relative to the wing or tail during operation and would not be removed after assembly or during operation except for perhaps maintenance on or replacement of the bearing **10**.

Both the inner and outer members **12, 16** are preferably formed of extremely rigid materials, such as steel or other metals. The intermediate member **14** should be formed of a resilient material and have a thickness that enables the inner member **12** to rotate relative to the outer member **16** so as to allow a desired range of motion of an associated control surface. Such a resilient material should deflect under compressive, tensile or torsional load and elastically return to its original configuration when the load is removed. As examples, resilient materials suitable for use with the present invention may have a Shore A hardness of between about 25 and 80. Preferred resilient materials include natural rubbers, blends of natural rubber and polybutadiene, and synthetic rubbers such as nitrile and silicone rubbers.

It is also preferred that, in order to provide bearing support, the resilient material have different radial and torsional spring rates; in particular, the intermediate layer **14** should be sufficient resistant to radial loads to provide bearing support, yet be sufficiently compliant to torsional loads to permit rotation of the inner member **12** relative to the outer member **16**. This anisotropic behavior may be achieved by properly selecting the thickness of the intermediate layer **14** and/or by forming the intermediate member **14** as a series of overlying rubber laminates, as such overlying layers can exhibit a very high compressive modulus compared to a similar thickness of a single rubber layer. If this technique is employed, it is also preferred that the inner layers he less flexible than the outer layers to compensate for the increased levels of stress present in the inner layers. In addition, the intermediate member **14** may include some stiffening shims (not shown) that increase the radial spring rate of the intermediate member **14**. Exemplary radial spring rates for the intermediate layer **14** may be between about 10,000 and 1,000,000 lb/in, with a radial spring rate of higher than 100,000 lb/in being preferred for a particular embodiment. Exemplary torsional spring rates for the intermediate layer **14** may be between about 10 and 10,000 lb/deg, with a torsional spring rate of greater than 1,240 in. lb/deg being preferred in a particular embodiment.

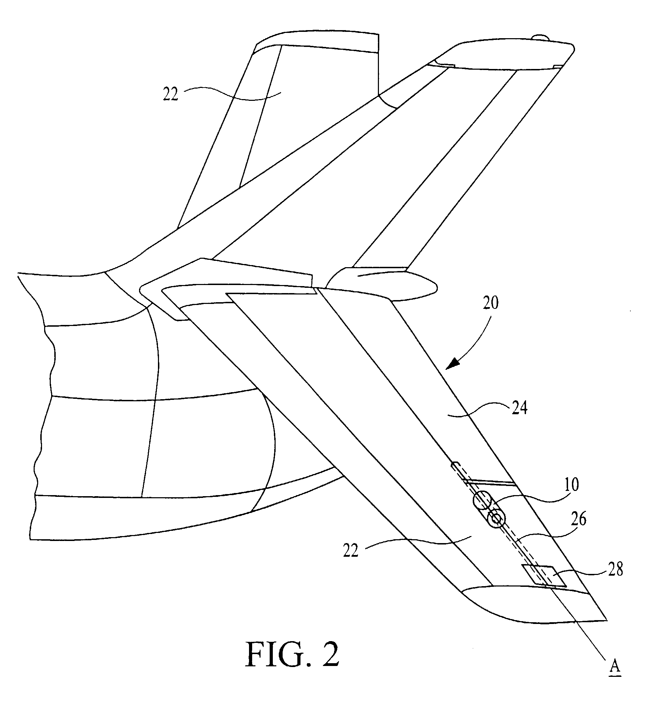

**Figure 2** illustrates an aircraft tail assembly **20** that includes a self-centering bearing **10**. The tail assembly **20** comprises two horizontal stabilizers **22**, each of which includes an elevator **24** (only one of which is shown in **Figure 2**). The elevator **24** is attached to a generally transversely-mounted shaft **26**. At the end opposite the elevator **24**, the shaft **26** is mounted to a rotary control system **28** that, based on input from the pilot or an automated maneuvering and guidance system, or a combination thereof, control the degree to which the elevator **24** pivots relative to the horizontal stabilizer **22** about longitudinal axis **A** of the shaft **26**.

The control system **28** can be mechanical (*e.g.*, hydraulic or pneumatic), electric, electronic, or of any other configuration that can control the movement of the elevator **24**. The control system **28** should be of a configuration that, if it is disabled, exerts little to no force on the shaft **26** and instead permits the shaft **26** to freely rotate relative to the control system **28** (or at least insufficient force to overcome the bearing return force described below). This can be accomplished by, for example, configuring an electronic control system to have as a default condition the application of no force or torque to the shaft **26**. Other configurations, both rotary and linear, for the control system **28** will be understood by those skilled in this art and need not be described in detail herein.

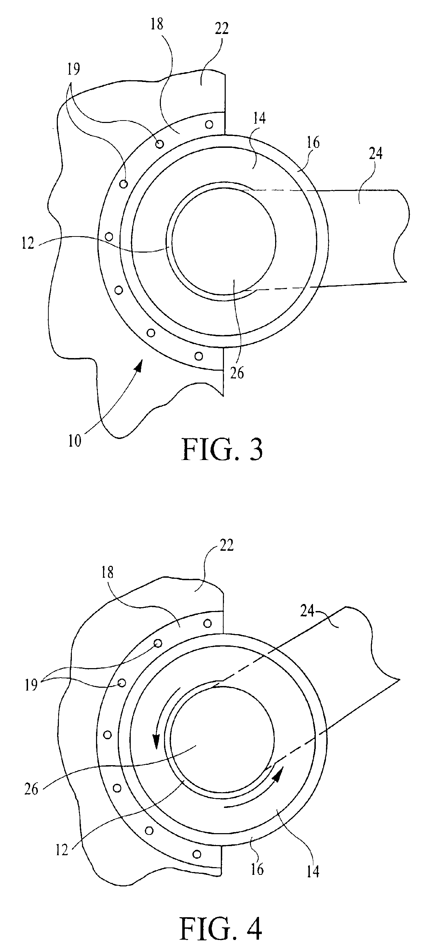

The shaft **26** is supported by a self-centered bearing **10** according to an embodiment of the present invention. The outer member **16** of each bearing **10** is non-releasably mounted to the horizontal stabilizer **22**. The inner member **12** of each bearing **10** is fixed to the shaft **26**. As shown in **Figure 4**, when the rotary control system **28** rotates the shaft **26** and the elevator **24**, the inner member **12** rotates also. However, the outer member **16** remains fixed relative to the horizontal stabilizer **22**. As such, the intermediate member **14** is forced to undergo angular deflection due to the torsion induced by the rotation of the inner member **12**. When the rotary control system **28** returns the shaft **26** and elevator **24** to their original neutral positions (**Figure 3**), the inner member **12** also returns to its original neutral position, and the intermediate member **14** returns to its original undeflected configuration.

When the inner member **12**, elevator **24** and shaft **26** are in a rotated position (such as that of **Figure 4**), the resilient member **14** biases the inner member **12** (and, in turn, the elevator **24** and the shaft **26**) toward the neutral position. As a result, in the event the rotary control system **28** becomes disabled, the intermediate member **14** can, by returning to its undeflected neutral position, return the elevator **24** and shaft **26** to their neutral positions. The neutral position is typically preferred over other positions the elevator may occupy in the event of control system disablement, as pilots can more easily maneuver the aircraft through a variety of necessary maneuvers when the elevators are in a neutral position than in other positions.

Those skilled in this art will recognize that, although the bearings **10** are illustrated herein on the aircraft tail assembly **20**, they may be equally suited to use in control surfaces assemblies for the mounting of ailerons, flaps and rudders of aircraft onto wings, tails and horizontal stabilizers, rudders and propellers of watercraft to mounting structures therefor, and other control surface members. In each instance, the self-centering nature of the bearing **10** can simplify control of the craft or vehicle in the event its control system is disabled.

It should also be noted that, although the illustrated bearing **10** includes a fixed outer member **16** and a rotatable inner member **12**, the present invention also encompasses devices in which the inner member is fixed and the outer member rotates. In either instance, the self-centering nature of the device is maintained. Further, although it may be preferred that the assembly return to the neutral position, it is also contemplated that. upon disabling of the control system, the shaft and control surface member may return to another preselected position based on the configuration of the control system.

An additional advantage of the present invention is that, by selecting the resilient material of the bearing intermediate member **14** properly, the bearing **10** can help to "tune" the assembly by modifying the resonant frequency of the system. For example, if the aircraft tail assembly **20** has a resonant frequency induced at a typical air speed, the tail assembly **20** may fail catastrophically, However, proper selection of the resilient material can modify the resonant frequency of the tail assembly **20** to a sufficient extent that travel at typical air speeds no longer causes concerns by modifying the spring and/or damping characteristics of the system. Similarly, the effects of "flutter" that arise from the configuration of a control surface assembly can also be attenuated by an appropriate selection of the resilient material.

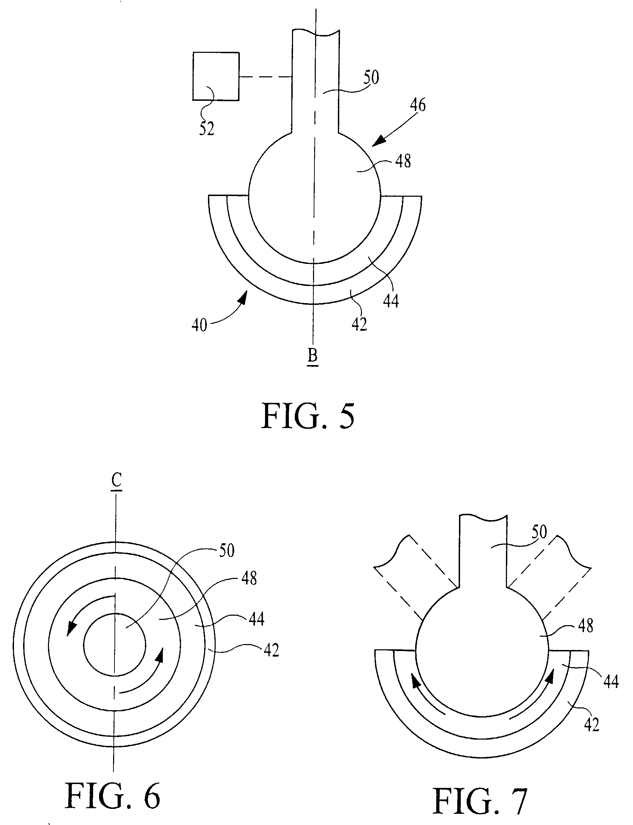

**Figures 5** through **7** illustrate another embodiment of a self-centering bearing of the present invention. As seen in **Figure 5**, the bearing, designated broadly at **40**, includes a hemispheric outer member **42**, a hemispheric resilient intermediate member **44** that overlies the outer member **42**, and an inner member **46** that has a spherical ball **48** that fits within the intermediate member **44** and a shaft **50** that is attached to and extends away from the ball **48**. The outer member **42** is fixed to an adjoining structure, and the shaft **50** of the inner member **46** is fixed to a control system **52** that can impart both rotation about the longitudinal axis **B** of the shaft **50** and pivoting motion about any axis of rotation (exemplified by axis **C** in **Figure 6**) that is normal to the longitudinal axis **B**.

The materials of construction for the inner and outer members **42, 46** are as described hereinabove for the inner and outer members of the bearing **10** illustrated in **Figure 1**; *i.e.,* they should be formed of stiff materials, such as steel and other metals. The intermediate member **44**, like the intermediate member **14** of the bearing **10**, should be formed of a resilient material, preferably a natural or synthetic rubber, that fits the description set forth hereinabove.

**Figures 6** and **7** demonstrate how the bearing **40** allows the rotation and pivotal movement described above, yet self-centers the shaft **50** relative to the outer member **42**. In **Figure 6**, the control system **52** causes the shaft **50** to pivot about the axis **C** during operation of the attached control system **52**; in doing so, the outer member **42** remains fixed, the ball **48** of the inner member **46** rotates relative to the outer member **42**, and the intermediate member **44** elastically deflects and biases the shaft **50** toward the neutral position. When the motion unit is disabled, the intermediate member **44** returns to its undeflected neutral position, thereby bringing the ball **48** of the inner member **46** to its neutral position.

In **Figure 7**, the shaft **50** is shown rotating about its longitudinal axis **B**; as discussed with reference to the embodiment of **Figures 3** and **4**, the outer member **42** remains fixed, the ball **48** of the inner member **46** rotates relative to the outer member **42**, and the intermediate member **44** elastically deflects and biases the inner member **46** toward the neutral position. If the control system **52** is disabled, the intermediate member **44** recovers to its undeflected neutral position, which in turn draws the ball **48** and the shaft **50** of the inner member **46** to its neutral position (**Figure 7**).

Those skilled in this art will recognize that any joint that includes both rotation and pivotal movement of the type illustrated and for which self-centering capability is desirable may be suitable for employing the illustrated bearing **40**. Exemplary devices that may be suitable for use include those used to mount antennae, robotic arms, heavy equipment appendages, joystick controls, and the like, as with any of these devices, the ability for the components to take a neutral position in the event of control system disabling may be important.

It should also be noted that, although the illustrated bearing **40** has a fixed outer member **42** and a rotatable and pivotable inner member **46**, the present invention encompasses devices in which the inner member is fixed and the outer member is rotatable and pivotable. Further, the present invention also contemplates devices in which the moveable member is free to rotate about the longitudinal axis **B** of the shaft **50** as illustrated in **Figure 7**, but is prevented from pivoting along one or more axes **C** normal to the axis **B**.

The foregoing is illustrative of the present invention and is not to be construed as limiting thereof. Although exemplary embodiments of this invention have been described, those skilled in the art will readily appreciate that many modifications are possible in the exemplary embodiments without materially departing from the novel teachings and advantages of this invention. Accordingly, all such modifications are intended to be included within the scope of this invention as defined in the claims. The invention is defined by the following claims, with equivalents of the claims to be included therein. In the claims, means-plus-function clauses are intended to cover the structures described herein as performing the recited function and not only structural equivalents but also equivalent structures.

## Claims

1. A self-centering control surface assembly for use in the maneuvering of a vehicle, comprising:
a control surface member;
a shaft attached to said control surface member, said shaft having a longitudinal axis defining an axis of rotation for said control surface member;
a control system connected with said shaft and configured to induce rotation in said shaft about said axis of rotation such that said control surface member rotates about said axis of rotation between a first preselected position and a second rotated position; and
a bearing comprising a first member, a second member and a resilient intermediate member positioned between and attached to said first and second members, said first member being attached to said shaft, and said second member being adapted for non-releasable fixed attachment to said vehicle during operation of said vehicle,
wherein, in response to rotation induced by said control system during operation of said vehicle, said first member, said shaft and said control surface member rotate about said axis of rotation from said preselected position to said rotated position, said second member remains fixed relative to said vehicle, and said intermediate member undergoes angular deflection and biases said first member, said shaft and said control surface member to rotate toward said preselected position, such that disabling of said control system causes said first member, said shaft and said control surface member to return to said preselected position.

2. The self-centering control surface assembly defined in Claim 1, wherein said intermediate member is formed of an elastomeric material.

3. The self-centering control surface assembly defined in Claim 2, wherein said elastomeric material comprises rubber.

4. The self-centering control surface assembly defined in Claim 2, wherein said elastomeric material has a Shore A hardness of between about 25 and 80.

5. The self-centering control surface assembly defined in Claim 4, wherein said elastomeric material has a torsional spring rate of between about 10 and 10,000 inches per degree.

6. The self-centering control surface assembly defined in Claim 1, wherein said bearing is substantially cylindrical, with said first member comprising a substantially cylindrical inner member, said intermediate member comprising a substantially cylindrical member overlying said inner member, and said second member comprising a substantially cylindrical outer member overlying said intermediate member.

7. The self-centering control surface assembly defined in Claim 1, wherein said assembly is configured to attach to an aircraft, and wherein said control surface member is one of an aileron, an elevator, a flap, or a rudder.

8. The self-centering control surface assembly defined in Claim 1, wherein said outer member further comprises a radially-outwardly extending flange having a pluarlity of mounting apertures.

9. The self-centering control surface assembly defined in Claim 1, wherein said control system is configured such that, upon disabling of said control system, said control system exerts essentially no force on said shaft.

10. A self-centering assembly for rotating and pivoting a moveable member, comprising:
a moveable member;
a shaft attached to said moveable member, said shaft having a longitudinal axis defining a first axis of rotation;
a control system connected with said shaft and configured to induce rotation in said shaft about said first axis of rotation such that said moveable member rotates about said axis of rotation between a first preselected position and a second rotated position, said control system also being configured to induce pivotal motion in said moveable member along a second axis of rotation substantially perpendicular to said first axis of rotation between said preselected position and a pivoted position; and
a bearing comprising a first member, a second member and a resilient intermediate member positioned between and attached to said first and second members, said first member being attached to said shaft, and said second member being adapted for fixed attachment to an external structure;
wherein, in response to rotation induced by said control system during operation of said vehicle, said first member, said shaft and said moveable member rotate about said axis of rotation from said preselected position to said rotated position, said second member remains fixed relative to said external structure, and said intermediate member undergoes angular deflection and biases said first member, said shaft and said moveable member to rotate toward said preselected position, such that disabling of said control system causes said first member, said shaft and said moveable member to return to said preselected position;
and wherein, in response to pivotal movement induced by said control system, said first member, said shaft and said moveable member pivot about said second axis of rotation from said preselected position to said pivoted position, said second member remains fixed relative to said external structure, and said intermediate member deflects and biases said first member, said shaft, and said moveable member toward said preselected position, such that disabling of said control system causes said first member, said shaft and said moveable member to return to said preselected position.

11. The self-centering assembly defined in Claim 10, wherein said intermediate member is formed of an elastomeric material.

12. The self-centering assembly defined in Claim 11, wherein said elastomeric material comprises rubber.

13. The self-centering assembly defined in Claim 11, wherein said elastomeric material has a Shore A hardness of between about 25 and 80.

14. The self-centering assembly defined in Claim 10, wherein said first member comprises a substantially hemispherical inner member, said intermediate member comprises a substantially hemispherical member overlying said inner member, and said second member comprises a substantially hemispherical outer member overlying said intermediate member.

15. The self-centering assembly defined in Claim 10, wherein said control system is configured such that, upon disabling of said control system, said control system exerts essentially no force on said shaft.

16. The self-centering assembly defined in Claim 10, wherein said control system is configured such that said shaft can pivot about a plurality of axes of rotation that are substantially perpendicular to said first axis of rotation.
